# EUROPEAN PATENT APPLICATION

(11) **EP 1 143 694 A2**
(43) Date of publication of application: **10.10.2001**
(21) Application number: 01302859.2
(22) Date of filing: 27.03.2001
(51) Int. Cl.: H04N 1/00

(54) **Image capture and processing accessory**

(30) Priority: 27.03.2000 US 192281 P
(71) Applicant: Symagery Microsystems Inc., Ottawa, Ontario K2K 2A5 (CA)
(72) Inventor: Roustaei, Alex, La Jolla, California 92037 (US); Farmilo, William, Vanier, Ontario K1L 5K8 (CA); McLean, Michael, Ottawa, Ontario K1N 8E8 (CA)
(74) Representative: Maury, Richard Philip

(57) **Abstract**

An imager for capturing and processing images for a variety of applications which may be connected to a transceiver such as a cell phone, a personal digital assistant or an internet appliance for transmitting the images over a limited bandwidth network, is described. The imaging applications include bar code and photograph still images, and permanent video and video phone motion images. The unager maybe self-contained providing the image signal to be transmitted by the transceiver, or the imager and the transceiver may be combined into a single integrated unit. The imager comprises a high resolution CMOS image sensor, a processor for controlling the image sensor and for processing image data from the image sensor, and an interface for providing commands to the processor and for viewing displays generated by the processor. The method of processing the images includes the steps of determining the bandwidth of the network, selecting an imaging application, determining the image format required, acquiring image data in the image sensor, processing the image data into the format required, and transferring the data for transmission over the network.

## Description

### Field of the Invention

The invention relates generally to devices for capturing images and more particularly for to an image capture and processing accessory for use with limited bandwidth networks such as wireless networks.

### Background of the Invention

Currently, "smart cell phones" equipped with a touch screen pen based liquid crystal display (LCD) are well known in the art and may be utilized as a personal digital assistant (PDA) with internet connectivity as well as voice and data transfer capabilities. The Neopoint 1600, the Nokia™ 9000 and pdQ™800 are examples of these phones already on the market. Other accessories like Handspring™ Visor Prism have add-on modules that can turn a PDA into a miniature digital camera. There are now numerous imaging applications such as video phones, digital cameras, video cameras and auto ID/bar code readers, all used as separate devices performing different functions.

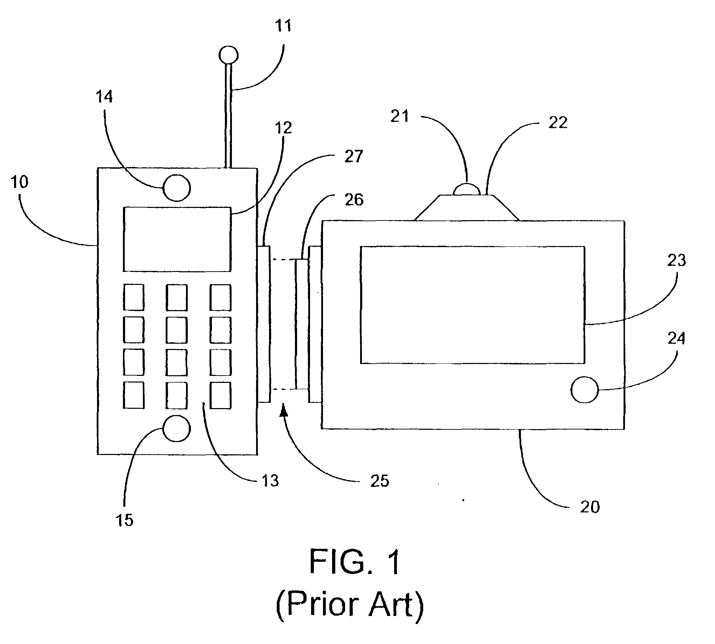

Imaging accessories that can be plugged into wireless appliances such as a cellular telephone are known in the industry. US Patent 5,893,037 which issued to Reele et al on April 6, 1999 describes a system where an attachment is either connected directly to a cellular telephone, or through a cable. Reele et al also describes a viewer that allows the user to view the images before they are processed and transmitted over the network. Such a system is illustrated in figure 1 which shows a cellular telephone, or any other portable wireless communication device with an attachment for capturing images. The cellular phone 10 includes an antenna 11 used for connecting to the wireless network, a display window 12, keys 13, a microphone 14, and speaker 15. The connection 25 between the image accessory 20 and cellular telephone 10 includes a male connector 26 and female connector 27 or vice versa. The image accessory 20 includes an image sensor 21, light source 22 for illuminating the image, a viewer 23 for viewing the captured image prior to and after processing, and an activation button 24 for activating the image capture. Note that the viewer, light source, and activation buttons are optional.

As seen in figure 1, the image accessory 20 has a direct connection between it and the cellular telephone 10. This set-up makes it difficult to view and capture an image at the same time. When performing video conferencing, one would like to view their own image to make sure it is in the field of view of the image sensor 21, along with the subject with whom the video conferencing is being held. This preliminary approach to transmitting image data over a network does not address issues of capturing images for different applications. It also does not address other applications such as digital code reading.

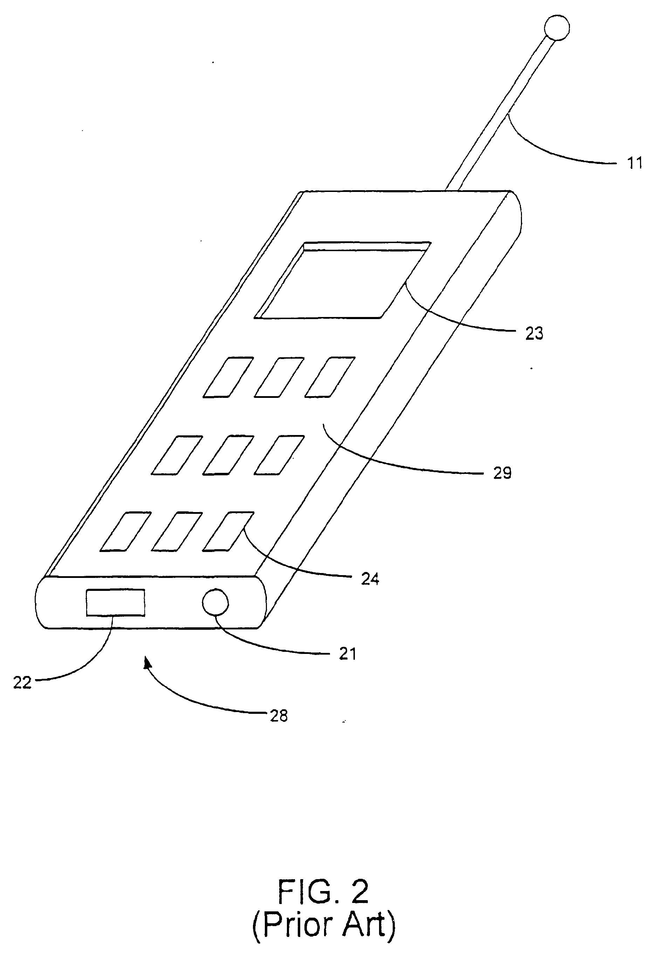

A further expansion of this idea is described in US Patent 6,122,526 which issued to Parulski et al on September 19, 2000. This system is illustrated in figure 2 which shows an example of image capture apparatus 28 that allows the user to select the receiver for captured images. The apparatus contains similar parts as those included in the attachment accessory illustrated in figure 1, including an image sensor 21, an illuminating source 22, a display window 23, and an activation button 24. The accessory further includes selection buttons 29 for selecting the receiver, and an antenna 11 for transmitting the captured image to the intended receiver.

In this system the user selects one or more receiving units to which a digital image is to be sent. These receiving units thereby dictate the appropriate image format and/or compression required based on the know capability of the receiving units. The problem with this is that most users do not know the channelavailability of their network. Although most dual-mode cellular telephones display to the user the current mode, whether digital or analog, the user is usually unaware of the data transfer capability of the network. The application of this idea is limited to sending the same type of image in different formats. If one were to use the attachment to capture an image that required full resolution and sent it through a device that would format the image, some or all information could be lost.

The automatic selection of a wireless network, for example between digital and analog networks is also known in the industry. The objective of the cellular telephone is to send the signal over the widest available bandwidth, therefore allowing the clearest voice and data transmission. With currently available "world phones," the selection of channels becomes more complex.

With the current number of wireless transmission devices, such as cell phones, PDA's and internet appliances, as well as the different image capture devices such video cameras, digital cameras, scanners and data collection terminals, available to the user, a person can become overwhelmingly cluttered with separate devices.

In addition, there are a number of typical image formats that are used for the various image capture and transmission applications. Such formats include mega-pixel formats (over 1,000,000 pixels of resolution), Video Graphic Array (VGA), Common Intermediate Format (CIF), and Quarter Common Intermediate Format (QCIF). Each of these formats is better suited for particular applications where the format is not only dictated by the application, but also by the transmission capacity of the wireless network.

In order to appear seamless, motion video needs to be provided at a rate of at least ten frames per second. Video phones may sacrifice some of this seamless display quality because of their bandwidth constraints. Some discontinuity is acceptable, but the aim is to provide a frame rate as close to ten frames per second as possible. If an imager is capable of providing images in a QCIF format (ideally 160 pixels x 120 pixels), it would produce an image frame that is approximately 20 kilobytes large. MPEG compression can reduce the size of this frame by a factor of ten. Therefore, the compressed image frame would be roughly 20 kilobits. Third generation (3G) cellular technology will have a minimum bandwidth of 144 kilobits per second when the phone is operated in a moving vehicle environment. That means a cell phone using the imager would be capable of transmitting 7 frames per second. This is more than acceptable for video phone applications.

Alternately, the bandwidth of third generation cell phones can be as high as 2,048 kilobits per second in a stationary environment. The width of the available channel should determine the size of the image frame being provided by an imager. This type of bandwidth would allow for the transmission of VGA format images (640 pixels x 480 pixels) at roughly 7 frames per second or CIF format images (320 pixels x 240 pixels) at 25 frames per second.

When an imager is capturing still images, a VGA format image is the lowest resolution that is acceptable. VGA resolution will provide an image of sufficient quality for most camera applications. For a scanner that is intended to capture encoded information from a two dimensional bar code stored in today's known optical encoding methods such as Data Matrix, Codabar or PDF417, it is not the resulting mega pixel image that is required, but rather the decoded bar code data.

Therefore, there is a need for an imaging accessory that can be used with various types of transmitters such as a cellular phone and that allows the user to capture images for various applications and successfully transmit them over a limited bandwidth network.

### Summary of the Invention

The invention is directed to an imager for capturing and processing images for transmission over a limited bandwidth network. The imager comprises a high resolution CMOS image sensor, an interface for selecting an imaging application and a processor. The processor controls the image sensor to acquire the image data, determines the image format required for the selected imaging application and the limited bandwidth network, processes the image data into the format required and transfers the data to be transmitted. The interface selects either still image applications such as bar code images and photograph images or motion image applications such as permanent video images and video phone images.

In accordance with another aspect of the invention, an imager and a transceiver may be combined into an apparatus for transmitting the processed image data over the limited bandwidth network. The transceiver may be a cellular phone, a digital assist device or an internet appliance for transmitting data over a wireless network. The apparatus may also comprise a buffer that can be integrated on a single chip with the image sensor and the processor, and that temporarily stores image data. A further data storage device may be coupled to the processor for storing data for subsequent transmission.

With regard to another aspect of this invention, the interface of a self-contained imager may comprise a display window and a number of keys coupled to the processor, while the interface for an imager/transceiver apparatus may comprise a common display window and keypad. In the combined apparatus, the display window and the image sensor may be movable relative to the apparatus as well as to each other, and the processor may control the positioning of the image sensor and the display window. The imager may also include a speaker and a microphone as well as light sources for illuminating a target to be imaged.

In accordance with another aspect of the invention, the imager/transceiver apparatus may be combined into one unit. However, as a variance, the sensor and the processor may be located in a first unit and the transceiver may be located in a second unit with a wireless communication link between the first unit and the second unit.

Another aspect of the present invention is the method of processing images for transmission over a limited bandwidth network using an imager having a high resolution CMOS image sensor. The method comprises the steps of selecting an imaging application, determining the image format required for the selected imaging application and the limited bandwidth network, acquiring image data in the image sensor, processing the image data into the format required and transferring the data to be transmitted over the network. The imaging applications may be still image applications including bar code images or photographic images, or motion image applications including permanent video images or video phone images.

The image sensor acquires the image at a resolution greater than one mega pixel. When a bar code image application is selected, the sensor image is processed by determining the area in the image containing the bar code, identifying the type of code in the bar code and decoding the code in the bar code. The resultant decoded data may be further compressed. When a photograph image application is selected, the sensor image is processed by reducing the mega pixel image to a lower pixel image format which may be the VGA format; the reduction process may use windowing, binning or sub-sampling techniques to format the sensor data. The formatted image data may then be further compressed if desired.

When a motion image application is selected, a sequential series of images is taken at a rate in the order often frames per second for permanent videos and seven frames per second for phone videos. The originally acquired images have a resolution greater than one mega pixel. Each of the images is then reduced to a lower pixel format. A phone video image would be reduced the CIF format or the QCIF format, while the permanent video image would be reduced to the VGA format. Format reduction may be achieved using windowing, binning or sub-sampling techniques. The resultant image data may also be further compressed in preparation for transmission.

With regard to a further specific aspect of the invention the selection of the imaging application may further cause the sensor to adjust its position to properly image a target. In addition, the method may further include the step of determining the available bandwidth in the network.

Other aspects and advantages of the invention, as well as the structure and operation of various embodiments of the invention, will become apparent to those ordinarily skilled in the art upon review of the following description of the invention in conjunction with the accompanying drawings.

### Brief Description of the Drawings

The invention will be described with reference to the accompanying drawings, wherein:
Figure 1 is a schematic diagram of an accessory for image capture as cited in the prior art;
Figure 2 is a schematic diagram of an accessory for choosing a destination receiver as cited in the prior art;
Figures 3 and 4 are schematic diagrams of an embodiment of an imager according to the present invention connected to a transceiver;
Figure 5 is a schematic diagram of an embodiment of an imager/transceiver combination according to the present invention;
Figure 6 is a block diagram of the imager according to the present invention;
Figure 7 is a flow diagram illustrating the process according to the present invention for capturing and transmitting images.
Figure 8 is a flow diagram of the processing of the captured image;
Figure 9 is a side view diagram of the image capture system including a movable display window and imager;
Figure 10 is a front view diagram of the image capture system including a movable display window and imager;
Figure 11 is an perspective view of the apparatus in figures 9 and 10 showing the position of the display window on the cellular phone;
Figures 12 and 13 are perspective and side views of a further embodiment of the image capture system in accordance with the present invention; and
Figure 14 is a schematic diagram of the image capture system using a wireless connection.

### Detailed Description of the Invention

The apparatus and method in accordance with the present invention comprises a versatile comprehensive imager which may be connected to a transceiver device such as a cell phone, a personal digital assistant or an internet appliance for capturing images required for a variety of applications and for transmitting the images over a limited bandwidth network. The imager may be self-contained providing the image signal to be transmitted by the transceiver, or the imager and the transceiver may be combined into a single integrated unit.

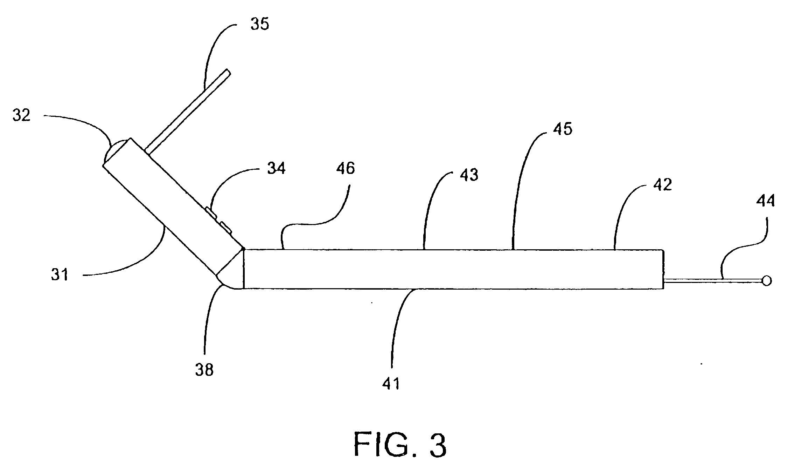

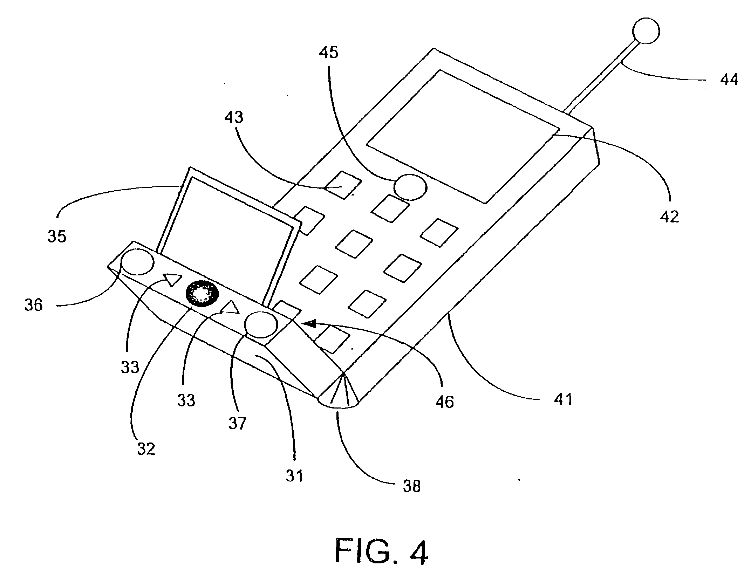

Figures 3 and 4 illustrate an embodiment of a high resolution imager accessory 31 in accordance with the present invention which is associated with a cellular phone 41. The imager accessory 31 captures either still or motion images and processes the images so that they may be transmitted over a limited bandwidth network through the cellular phone 41. The imager 31 includes a high resolution image sensor 32 having at least a megapixel array for imaging the target and a light source 33 for illuminating the target. The imager accessory 31 further includes keys 34 for operating the imager 31, a display window 35 for viewing the captured image, as well as a speaker 36 and a microphone 37. The imager 31 may be detached from or attached to the cellular phone 41 by a moveable hinge 38. Figure 4 shows the imager 31 in a pivoted position relative to the cellular phone 41. In addition, imager 31 is electrically connected to the cellular phone 41 either through a cable connection or through the hinge 38. The display window 35 may also be hinged to allow it to pivot upward from the imager 31 as seen in figures 3 and 4. The cellular phone 41 is a typical unit adapted to transmit and receive voice and data signals over the wireless network and includes a display window 42, a keypad 43, an antenna 44, a speaker 45 and a microphone 46.

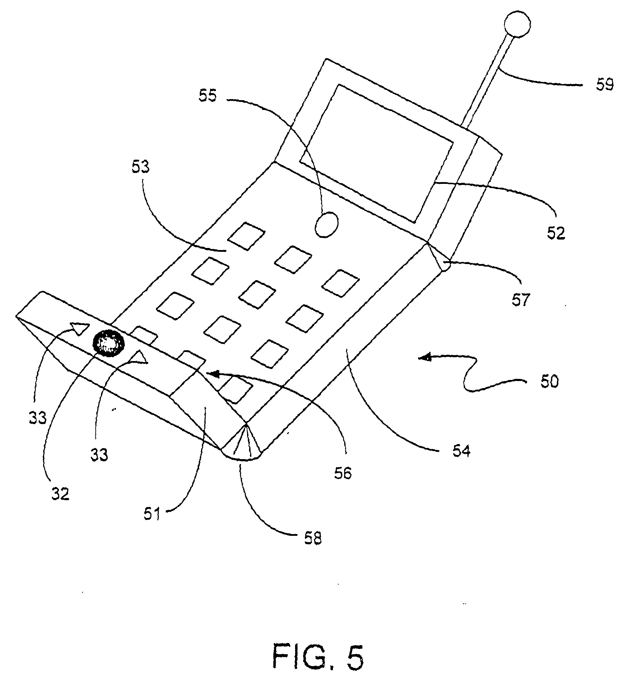

Figure 5 illustrates an imager/cellular phone combination 50 where the imager 51 and the cellular telephone 54 share some of the elements. The cellular phone section 54 includes a display window 52, a keypad 53, a speaker 55, a microphone 56 and an antenna 59. The keypad 53 is used to perform conventional cell phone 54 controls and is also used as a userinterface to control the functions of imager 51 and to select the imager 51 applications, The display window 52 is used to view conventional cellular phone 54 displays and may also be used to view captured images. In addition, the speaker 55 and microphone 56 will be used in imager applications such as conference calling. Also, for convenience, the display window 52 section of the cellular phone may be attached to the body by hinge 57 such that it can be rotated inward as shown. The antenna 59 is used to transmit and receive voice messages over the wireless network and also for transmitting the captured images over the network.

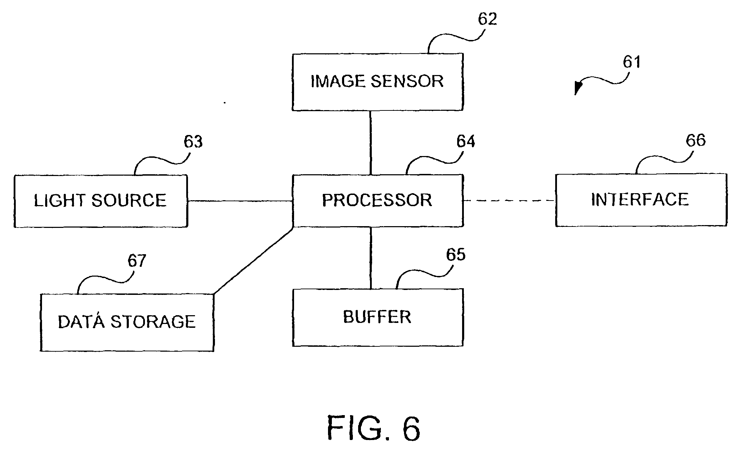

A block diagram of the imager 31 or 51 is illustrated in figure 6 as imager 61. Imager 61 includes a high resolution image sensor 62 having a resolution of one or more megapixels, an image processor 64 for controlling the image sensor 62 and for processing the image data, and a buffer 65 for temporarily storing image data. The image sensor 62, image processor 64 and buffer 65 may be integrated on the same chip. The processor is controlled through an interface 66 which, as described above with respect to figures 3 and 4, is integrated within the imager 31 or, as described with respect to figure 5, is an interface shared with the cellular phone 54. The processor 64 may further control a light source 63 if one is required.

Cellular phones do not normally have mass storage capabilities such as disk drives or flash cards, and therefore the inclusion of a data storage device 67 suchas a removable flash card to the imager 61 for storing the data created by the imager 61 would be very useful. In addition, as cell phones offer the option of internet connectivity, added storage for image data could be provided at a web site. Images would be captured by the imager 61 and then transferred by the cell phone to the web site for storage. Such a site could offer still photograph storage, video storage, or even the recording of video conferences. To record a video conference, the user would arrange a multi-party call where one of the parties is the web site's server rather than a participant in the discussion. This web site could also be used as a video message service or "video mail" service. For example, if one party were not to answer the phone, the call would be routed to the web site so that the caller could leave a video message from a live feed or perhaps a prorecorded video.

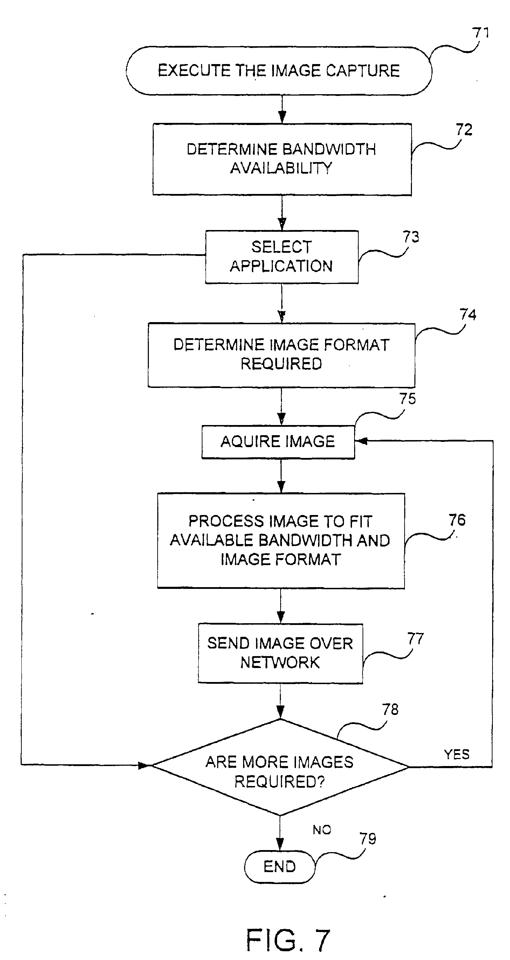

The imager 61 in accordance with the present invention operates in the following manner as illustrated in figure 7. The imager 61 is activated - 71 -which causes the cellular phone to search for a service. Service is normally found automatically and the available bandwidth of the carrier is determined- 72. The user interface 66 is used to select the desired application - 73 - which may be an application for capturing a still image or a motion image, or again it may be standard cellular phone voice or data application. From the image application selected, the required image formar is determined - 74 - since the available bandwidth and the resolution required for that particular image application are known. The imager 61 captures the image - 75 - which is processed - 76 - by the processor 64. At this point the processor 64 may use a compression software such as JPEG for still images or MPEG for motion images to compress the image for transmission. The image is then sent over the wireless network - 77 - through the cellular phone. If further images are required, as is the case when a video image application has been selected - 73 - the command is sent to the imager to capture a further sequential image - 78-, otherwise the process is ended - 79.

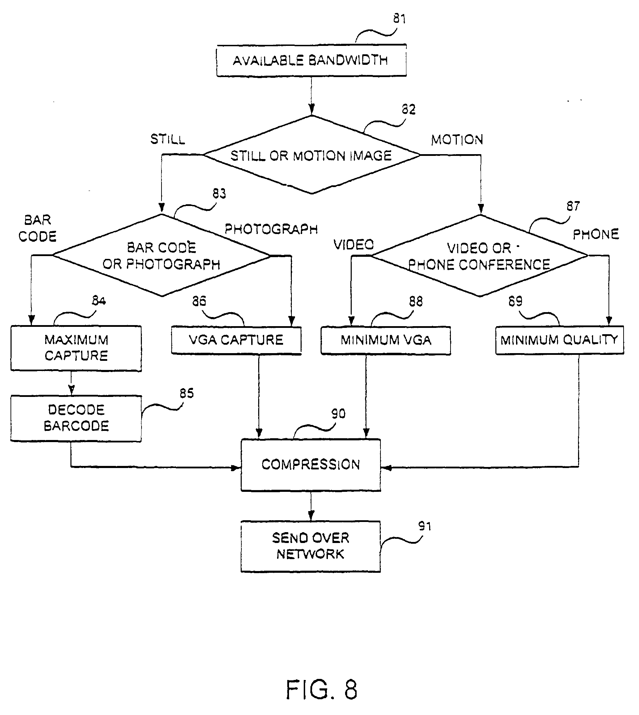

Figure 8 illustrates the flow diagram of the factors considered during the processing of a captured image. The imager 61 is capable of megapixel resolution which is required for accurately capturing bar codes, but may not be necessary or even desirable for other image applications. After the available bandwidth of the network has been determined - 81, the processor 64 considers whether the image is a still image or a motion image- 82. Normally, a still image's quality and therefore resolution will be the prime governing factor in its production; whereas in a motion image where a series of images are transmitted sequentially within a limited period of time, the speed of transmission will be the prime governing factor.

If a still image mode has been selected, it is a consideration whether it is a bar code or a photograph image - 83. A bar code will require the processor 64 to maximize the capture by reading out the entire image sensor 62 array at megapixel resolution - 84. Once the image is captured, the processor 64 decodes the bar code image - 85; this is done by determining which areas in the image contain encoded information, identifying the type of code used to store the information, and finally decoding the stored information. This may be done using the parallel processing method outlined in US Patent 6,123,261 which issued on September 26, 2000 to Roustaei and which is incorporated herein by reference. The processor 64 will therefore decode the bar code - 85 - and compress - 90 -, if necessary, only the decoded information before it is transmitted - 91.

For satisfactory quality, a photograph requires as a minimum a VGA format - 86 - which is a 640 pixel by 320 pixel format. Higher quality may be desirable if the image is to be manipulated and /or enhanced at some future time. Since the sensor 62 is a high resolution megapixel sensor providing the data from every pixel location would provide superfluous data. The desired image format can be produced in a number of different ways. To reduce the amount of data per image to a lower pixel image format, the processor 64 may either read out only certain selected pixels in the image sensor 62 such as by using a windowing or a subsampling techniques, or the processor 64 may read out all of the pixels in the image sensor 62 and then manipulate the image data such as by using binning techniques. A CMOS image sensor 62 is ideal for these techniques because of the ability of the sensor 62 to be randomly accessed to specific pixels in the sensor array by the image processor 64. Using windowing techniques the processor 64 can read out data from only a portion of the sensor 62 array. For example, an area of 640 pixels by 320 pixels may be readout from the center of a mega-pixel array. In a sub-sampling process, the processor 64 will read out of every n'th pixel. In a binning process, the processor 64 can read out all of the pixels from the sensor 62 and then sum or average groups of pixels into kernels which can effectively provide the amount of data as produced by a 640 pixels by 320 pixels array. By this process, the amount of data produced for the image can be scaled down depending on the extent of the sub-sampling while maintaining the quality of image desired, such as a 640 pixels by 320 pixels image format in this case. The sub-sampling technique can result in aliasing artefacts but is simple to implement, while the binning technique which is more complex to implement, avoids the aliasing problem. The photograph data will then be compressed -90 -, if required, before it is transmitted - 91. If the photograph data is processed faster then it can be transmitted, it may be temporarily stored in the buffer 65.

If a motion image mode has been selected, it is a consideration whether it is a permanent video or a phone conference video - 87. A permanent video requires a high level of resolution such as the VGA format - 88 - and preferably produced at a frame rate of at least 10 frames per second. In view of the constraint of time, processor 64 will use techniques such as windowing or sub-sampling to capture the images required. Further, the processor 64 may direct a permanent video through compression - 90 - to data storage device 67 for later.

A phone conference video required as a minimum a QCIF resolution- 89 - at a frame rate of 7 frames per second. Any of the techniques described above may be used by the processor 64 to capture the images at these levels. The resultant video phone data may then be compressed using a conventional compression software- 90 - which may allow the phone video quality to be at a higher level then the minimum acceptable and still be transmitted over the limited bandwidth network- 91.

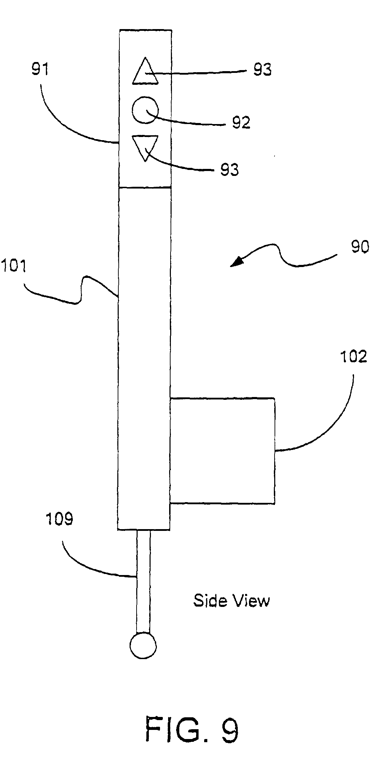

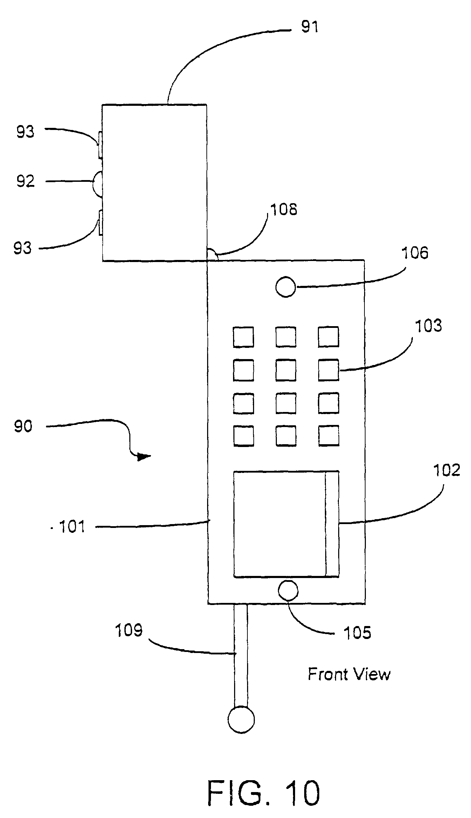

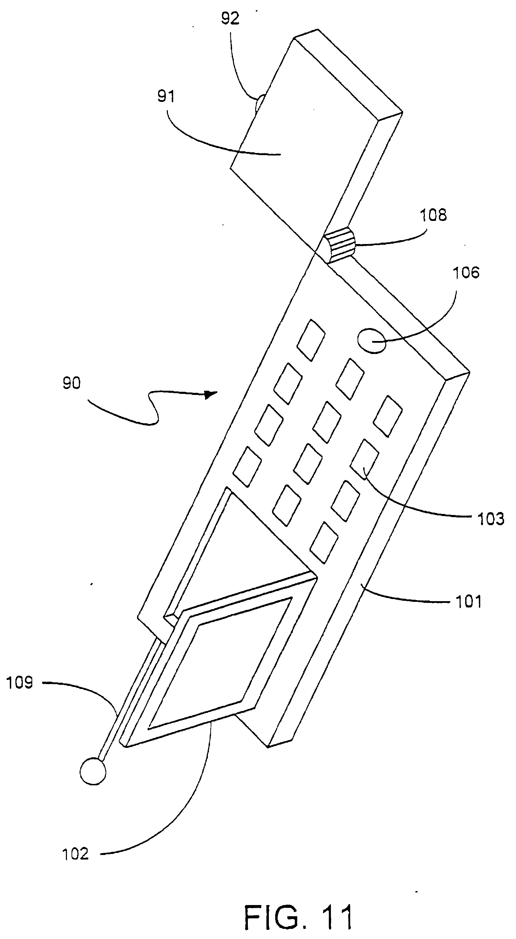

Figures 9, 10 and 11 provide a side view, a front view and a perspective view of a further embodiment in accordance with the present invention. The imager/transceiver 90 includes an imager section 91 and a cellular phone section 101. The imager 91 includes an image sensor 92 and a light source 93, whereas the cellular phone includes a display window 102, a keypad 103, a speaker 105 and a microphone 106 and an antenna 109. In this embodiment, the imager 91 is connected by a hinge 98 to one corner of the cellular phone 101 such that it may be rotated in the plane of the phone. In addition, the display window 102 is also hinged such that it may be moved perpendicular to the plane of the cellular phone 102. This allows the user to conveniently point the image sensor 92 at a target while at the same to view the image on the display window 102. An alternate arrangement would be have the imager 91 swing back perpendicular to the plane of the cellular phone 101 such that the image sensor points away from the user as the user is looking directly at the cellular phone 101. These improvements are especially useful with applications such as video still cameras or optical code reading.

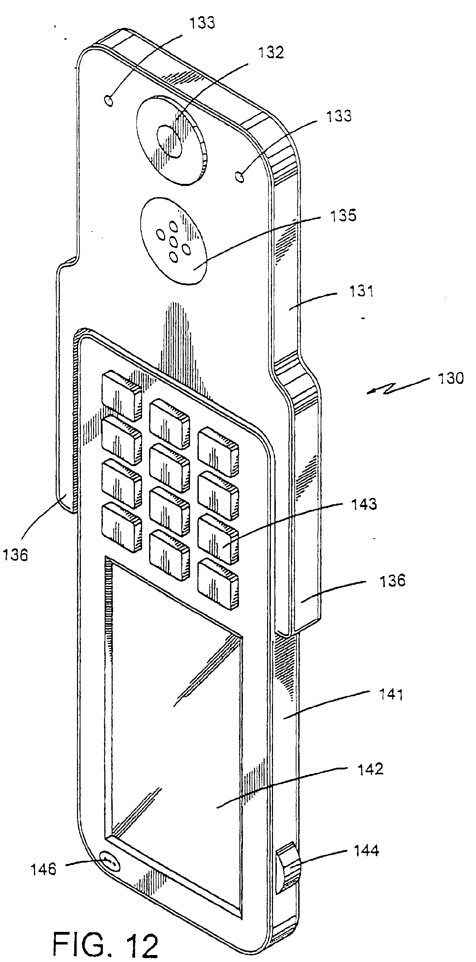

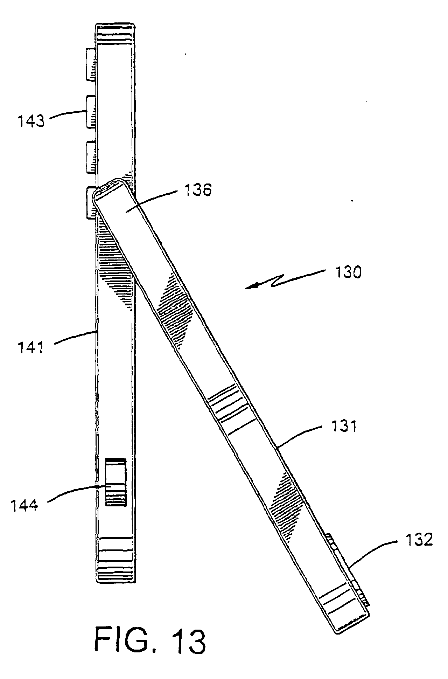

Figures 12 and 13 illustrate an apparatus similar to the one described above. The body of this particular imager/transceiver apparatus 130 is constructed in two sections. The imager section 131 includes an image sensor 132, a pair of light sources 133 and a speaker 135. The cellular phone section 141 includes a display window 142, a keypad 143, a switch 144 and a microphone 146. The imager section 131 is hinged to the cellular phone section 141 at the end of arms 136 such that the imager section can be rotated through at least 160 degrees to face away from the front of the cellular phone section 141 as seen in figure 13.

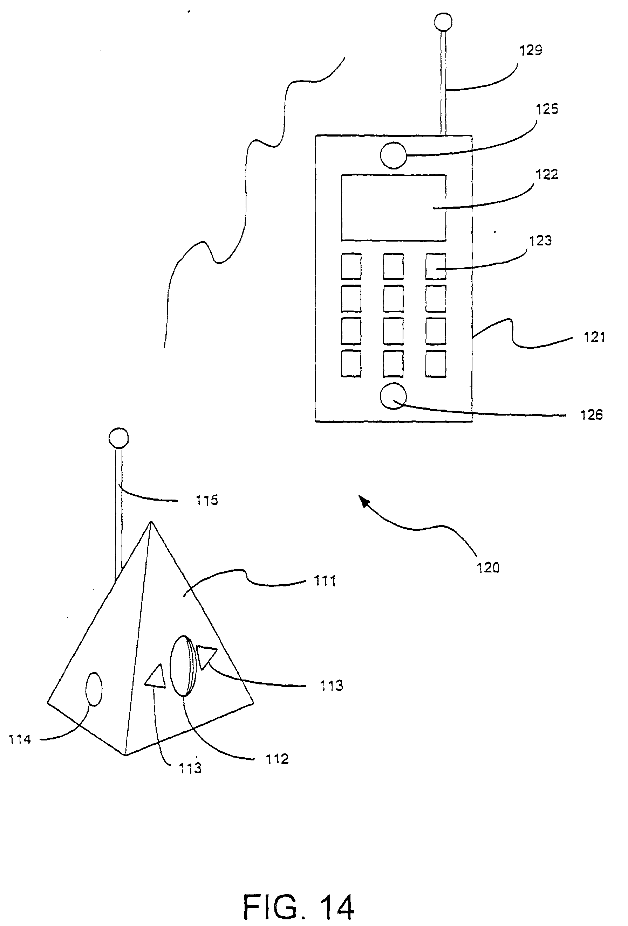

Figure 14 shows a further embodiment of an image capture system 120 in accordance with the present invention. In this embodiment, the imager 111 is physically separate from the cellular phone 121 having a wireless connection between the two. This wireless connectivity can be provided by a communications link based on the Bluetooth protocol. The imager includes an image sensor 112, light source 113, an optional activation button 114, and an antenna 115 used for a short wireless connection between the imager 111 and cellular phone 121. The cellular phone 121 includes a display window 122, a keypad 123, a speaker 125, a microphone 126 and an antenna 129. Through the antenna 129, control signals are transmitted to the imager 111 and image signals are received from the imager 111 for transmission on the wireless network. The antenna 129 is also used to receive and transmit signals on the wireless network. In a further arrangement, a separate transmitting/receiving unit could be plugged into the cellular phone 121 to communicate with the imager 111.

Though application selections may be made using the various keypads 43, 53, 103, 143 as described above, it may be desirable to have the imager 31, 51, 91, 131 sense its position relative to the cellular phone 41, 54, 101, 141 in order to determine the application selected by the user. If, for example, the user rotates the imager 31 to a position depicted in figures 3 and 4, the processor in the imager 31 would automatically choose the appropriate resolution and mode for video conferencing. If the imager 91 is positioned as in figures 9, 10 and 11, the imager 91 would determine that it is being used as a scanner or camera for stills or movies. In a further arrangement, where the application is selected through the keypad, the imager 91 may be made to automatically adjust its position to suit the needs of the user.

In addition, for the comfort of the user, a head set and microphone connected to the cellular phone or a speakerphone system may be used so that the user does not have to hold the cellular phone directly in front in order to speak into the cellular phone. In such a case, the imager 31, 51, 91, 111 or 131 would require a connector into which the headset could be plugged.

The user usually wants the highest picture quality that can be sent over the limited bandwidth network during the shortest time interval. The present invention provides an imaging accessory that can be connected to a transceiver with the advantage that it allows the user to capture various image formats like optical code, digital stills, or full motion video. The accessory will also allow the cellular phone to operate as a videophone.

Though the present invention is described in conjunction with a cellular phone, the present invention is also applicable to other known forms of transceivers that allow access to a limited bandwidth networks such as landline phones or wireless devices including PDA's or internet appliances.

While the invention has been described according to what is presently considered to be the most practical and preferred embodiments, it must be understood that the invention is not limited to the disclosed embodiments. Those ordinarily skilled in the art will understand that various modifications and equivalent structures and functions may be made without departing from the spirit and scope of the invention as defined in the claims. Therefore, the invention as defined in the claims must be accorded the broadest possible interpretation so as to encompass all such modifications and equivalent structures and functions.

## Claims

1. An imager for capturing and processing images to be transmitted over a limited bandwidth network comprising:
- a high resolution CMOS image sensor for acquiring image data of a target;
- interface means for selecting an imaging application; and
- processor means comprising:
- means for controlling the image sensor to acquire the image data;
- means for determining the image format required for the selected imaging application and the limited bandwidth network;
- means for processing the image data into the format required; and
- means for transferring the data to be transmitted over the network.

2. An imager as claimed in claim 1 wherein the imager further comprises buffer means coupled to the processor means for temporarily storing image data.

3. An imager as claimed in claim 2 wherein the image sensor, the processor means and the buffer means are integrated on a single chip.

4. An imager as claimed in claim 1 wherein the imager further comprises data storage means coupled to the processor means for storing data for subsequent transmission.

5. An imager as claimed in claim 1 wherein the interface means includes:
- means for selecting a still image application; and
- means for selecting a motion image application.

6. An imager as claimed in claim 5 wherein the still image application selecting means comprises:
- means for selecting a bar code image application; and
- means for selecting a photograph image application.

7. An imager as claimed in claim 6 wherein the motion image application selecting means comprises:
- means for selecting a permanent video image application; and
- means for selecting a video phone image application.

8. An imager as claimed in claim 5 wherein the motion image application selecting means comprises:
- means for selecting a permanent video image application; and
- means for selecting a video phone image application.

9. An imager as claimed in claim 7 wherein the imager further comprises buffer means coupled to the processor means for temporarily storing image data.

10. An imager as claimed in claim 7 wherein the imager further comprises data storage means coupled to the processor means for storing data for subsequent transmission.

11. An imager as claimed in claim 1 wherein the interface means comprises a number of keys.

12. An imager as claimed in claim 11 wherein the interface means includes a display window for viewing displays generated by the processor means.

13. An imager as claimed in claim 12 wherein the display window is movable relative to the imager.

14. An imager as claimed in claim 1 wherein the imager further comprises speaker means and microphone means.

15. An imager as claimed in claim 1 wherein the imager further comprises light source means for illuminating the target to be imaged.

16. An apparatus for capturing, processing and transmitting an image over a limited bandwidth network comprising:
- a high resolution CMOS image sensor for acquiring image data of a target;
- interface means for selecting an imaging application; and
- processor means comprising:
- means for controlling the image sensor to acquire the image data;
- means for determining the image format required for the selected imaging application and the limited bandwidth network;
- means for processing the image data into the format required;
- means for transferring the data to be transmitted over the network; and
- transceiver means for transmitting the transferred image data over the limited bandwidth network.

17. An apparatus as claimed in claim 16 wherein the network is a wireless network.

18. An apparatus as claimed in claim 17 wherein the transceiver is a cellular phone, a digital assist device or an internet appliance.

19. An apparatus as claimed in claim 16 wherein the apparatus further comprises buffer means coupled to the processor means for temporarily storing image data.

20. An apparatus as claimed in claim 19 wherein the image sensor, the processor means and the buffer means are integrated on a single chip.

21. An apparatus as claimed in claim 16 wherein the apparatus further comprises data storage means coupled to the processor means for storing data for subsequent transmission.

22. An apparatus as claimed in claim 16 wherein the first means comprises:
- means for selecting a still image application; and
- means for selecting a motion image application.

23. An apparatus as claimed in claim 22 wherein the still image application means includes:
- means for selecting a bar code image application; and
- means for selecting a photograph image application.

24. An apparatus as claimed in claim 23 wherein the motion image application means comprises:
- means for selecting a permanent video image application; and
- means for selecting a video phone image application.

25. An apparatus as claimed in claim 22 wherein the motion image application means comprises:
- means for selecting a permanent video image application; and
- means for selecting a video phone image application.

26. An apparatus as claimed in claim 23 wherein the apparatus further comprises buffer means coupled to the processor means for temporarily storing image data.

27. An apparatus as claimed in claim 23 wherein the apparatus further comprises data storage means coupled to the processor means for storing data for subsequent transmission.

28. An apparatus as claimed in claim 16 wherein the transceiver means includes means for determining the bandwidth of the network.

29. An apparatus as claimed in claim 16 wherein the interface comprises a keypad and a display window.

30. An apparatus as claimed in claim 29 wherein the display window is movable relative to the apparatus.

31. An apparatus as claimed in claim 29 wherein sensor means is movable relative to the apparatus.

32. An apparatus as claimed in claim 29 wherein the sensor means and the display window are movable relative to each other and to the apparatus.

33. An apparatus as claimed in claim 32 wherein the processor means controls the position of the sensor means and/or the display window relative to the apparatus.

34. An apparatus as claimed in claim 16 wherein the sensor means and the processor means are located in a first unit and the transceiver means is located in a second unit, and the wherein the apparatus includes a wireless communication link between the first unit and the second unit.

35. An apparatus as claimed in claim 16 wherein the apparatus further comprises light source means for illuminating a target to be imaged.

36. A method of processing images for transmission over a limited bandwidth network using an imager having a high resolution CMOS image sensor comprising the steps of:
a. selecting an imaging application;
b. determining the image format required for the selected application and the limited bandwidth network;
c. acquiring image data in the image sensor;
d. processing the image data into the format required; and
e. transferring the data for transmission over the network.

37. A method as claimed in claim 36 wherein the image application selecting step
a. includes:
a1. selecting a still image application; or
a2. selecting a motion image application.

38. A method as claimed in claim 37 wherein the still image selecting step a1. includes:
a11. selecting a bar code image application; or
a12. selecting a photograph image application.

39. A method as claimed in claim 38 wherein the motion image selecting step a2. includes:
a21. selecting a permanent video image application; or
a22. selecting a video phone image application.

40. A method as claimed in claim 37 wherein the motion image selecting step a2. includes:
a21. selecting a permanent video image application; or
a22. selecting a video phone image application.

41. A method as claimed in claim 39 wherein the image acquiring step c. comprises acquiring an image having a resolution greater than one mega pixel.

42. A method as claimed in claim 41 wherein when a permanent video image application is selected, step d. comprises:
d11. determining the area in the image containing the bar code;
d12. identifying the type of code in the bar code;
d13. decoding the code in the bar code.

43. A method as claimed in claim 42 wherein step d. further comprises compressing the decoded data.

44. A method as claimed in claim 41 wherein when a photograph image application is selected, d. comprises:
d21. reducing the mega pixel image to a lower pixel image format.

45. A method as claimed in claim 44 wherein step d21. uses windowing, binning or sub-sampling techniques to format the image data.

46. A method as claimed in claim 44 wherein the lower pixel image format in step d21. is a VGA 640 pixel by 480 pixel format.

47. A method as claimed in claim 44 wherein step d. further includes compressing the data in the lower pixel image format.

48. A method as claimed in claim 39 wherein the image acquiring step c. comprises acquiring a sequential series of images having a resolution greater than one mega pixel.

49. A method as claimed in claim 48 wherein, when a permanent video image application is selected, step d. comprises:
d31. sequentially reducing each of the mega pixel images to a lower pixel image format.

50. A method as claimed in claim 49 wherein step d31. uses windowing, binning or sub-sampling techniques to format the image data.

51. A method as claimed in claim 49 wherein the sequential images are acquired at a rate in the order of ten image frames per second.

52. A method as claimed in claim 49 wherein the lower pixel image format in step d31, is a VGA 640 pixel by 480 pixel format.

53. A method as claimed in claim 49 wherein step d. further includes compressing the data in the lower pixel image format.

54. A method as claimed in claim 48 wherein, when a video phone image application is selected, step d. comprises:
d41. sequentially reducing each of the mega pixel images to a lower pixel image format.

55. A method as claimed in claim 54 wherein step d41. uses windowing, binning or sub-sampling techniques to format the image data.

56. A method as claimed in claim 54 wherein the sequential images are acquired at a rare in the order of seven image frames per second.

57. A method as claimed in claim 54 wherein the lower pixel image format in step d41. is a CIF 320 pixel by 240 pixel format or a QCIF 160 pixel by 120 pixel format.

58. A method as claimed in claim 54 wherein step d. further includes compressing the data in the lower pixel image format.

59. A method as claimed in claim 36 wherein step a includes adjusting the position of the image sensor for the selected image application.

60. A method as claimed in claim 36 which further includes determining the bandwidth of the network.
